# EUROPÄISCHE PATENTSCHRIFT

(11) **EP 0 561 019 B1**
(45) Veröffentlichungstag und Bekanntmachung des Hinweises auf die Patenterteilung: **02.11.1994**
(21) Anmeldenummer: 92104640.5
(22) Anmeldetag: 18.03.1992
(51) Int. Cl.: F01N 7/14

(54) **Vorrichtung zur Lagefixierung einer Innenschale in einem Gehäuse einer Abgasanlage für Fahrzeuge**
Arrangement for positioning an inner shell in the casing of an exhaust device for vehicles
Dispositif pour le positionnement d'un boîtier intérieur dans le boîtier d'une installation d'échappement pour véhicules

(43) Veröffentlichungstag der Anmeldung: 22.09.1993
(73) Patentinhaber: Firma J. Eberspächer, D-73730 Esslingen (DE)
(72) Erfinder: Schlenker, Friedrich, W-7310 Plochingen (DE)

(56) Entgegenhaltungen:
- EP-A- 0 212 243
- EP-A- 0 278 455
- WO-A-91/02143
- DE-A- 3 922 667
- US-A- 3 692 497
- US-A- 3 978 567
- US-A- 4 985 212

## Beschreibung

Die Erfindung betrifft eine Vorrichtung in einer der Reinigung und/oder der Schalldämpfung von Verbrennungsmotor-Abgasen dienenden Abgasanlage mit einem Einlaßtrichter, einem Auslaßtrichter und dazwischenliegendem Durchströmungsabschnitt, mit einer vom Abgas durchströmten Innenschale und einer ein Gehäuse bildenden Außenschale, welche die Innenschale mit einem Abstand umgibt, in dem insbesondere Isolierstoff angeordnet ist, zur Lagefixierung der Innenschale in der das Gehäuse bildenden Außenschale, wobei die Innen- und Außenschale jeweils aus Halbschalen aufgebaut sind, die zu ihrer Verbindung miteinander jeweils Flansche aufweisen, und wobei in einem isolierstoffreien Bereich des Raumes zwischen Innen- und Außenschale mindestens ein aus einem metallischen Gestrick oder Gewebe gebildetes Halteelement angeordnet ist, das sich zwischen den Flanschen der Innen- und Außenschalen erstreckt.

Vorrichtungen für die Reinigung von Verbrennungsmotor-Abgasen sind bereits grundsätzlich bekannt. Bei diesen Vorrichtungen ist ein katalytisch wirksamer Monolith in einem Gehäuse angeordnet. Wegen der unterschiedlichen Wärmedehnungen des meistens keramischen Monolithen und dem metallischen Gehäuse sowie zur Halterung des Monolithen in radialer und axialer Richtung ist der Monolith in einer Innenschale direkt oder unter Zwischenschaltung einer Halterungsmatte angeordnet. Dabei erstreckt sich die Innenschale über zumindest nahezu die gesamte Länge der Anordnung, Innenschale und Außenschale verlaufen dabei in etwa parallel. Der Raum zwischen der Innenschale und der Außenschale ist dabei mit einem Wärmeisolierstoff gefüllt, um die Außenschale gegen Überhitzung zu schützen, aber auch, um die schalldämpfende Wirkung der Anlage zu erhöhen. In den beiden Endbereichen, den Abgaseintrittsstutzen und dem Abgasaustrittsstutzen oder den Übergangsbereichen von den Stutzen zum Durchströmteil sind die Innenschale und die Außenschale miteinander verbunden. Durch diese Verbindung durch Aufschweißen der Außenschale auf die Innenschale erfolgt jedoch an diesen besonders heißen Stellen eine erhöhte Wärmeabstrahlung, z.B. auf den Boden des Fahrzeuges, in dem die Anordnung eingebaut ist, so daß zusätzlich am Fahrzeugboden ein Wärmeschutzschild angebracht sein muß. Diese Verbindungsstellen sind ferner Schallüberträger, so daß dort eine hohe Schallabstrahlung erfolgt.

Diese Probleme wurden erkannt und in der DE-A-39 22 667, welche der eingangs umrissenen Gattung zugrunde liegt, eine Lösung aufgezeigt, bei welcher eine flächige Metall/Metall-Verbindung dadurch vermieden wird, daß an diesen Stellen ein elastisches Halteelement aus zusammengepreßtem Drahtgestrick oder Drahtgewebe angeordnet wird. Diese Halteelemente können durchgehend ringförmig ausgebildet oder aus Teilhalteelementen zusammengesetzt ringförmig sein. Jedes der Teilhalteelemente soll formschlüssig in Umfangsrichtung festgelegt werden, wozu es an seinen Enden jeweils radial verdickt ist und bei seiner Montage derart verformt wird , daß es mit diesen Enden jeweils in einer Ausbuchtung der Außenschale angeordnet wird. Damit ergibt sich eine schwimmende und doch lagefixierte Anordnung.

Es hat sich in der Praxis gezeigt, daß bei allen Vorteilen dieser bekannten Anordnung doch die Lagefixierung der Innenschale nicht ausreichend ist und Spannungen auf die Außenschale übertragen werden. Außerdem ist die Montage der Anordnung für ein Produkt, das in sehr großer Stückzahl gefertigt wird, zu aufwendig.

Ausgehend von der Erkenntnis, daß die beiden Funktionen "Verbindung der Außenschale mit der Innenschale" und "Lagefixierung der Innenschale gegenüber der Außenschale" auch getrennt werden können, liegt der vorliegenden Erfindung die Aufgabe zugrunde, eine gattungsgemäße Vorrichtung aufzuzeigen, bei welcher unter Wahrung des bewährten Aufbaus aus Halbschalen und der verbesserten Schalldämpfung die Lagefixierung der Innenschale gegenüber der Außenschale durch Anwendung besonders einfach anzuordnender Mittel verbessert wird.

Diese Aufgabe wird gemäß der vorliegenden Erfindung dadurch gelöst, daß bei einer gattungsgemäßen Vorrichtung das einteilig ausgebildete Halteelement sich nur über einen Teil des Umfangs der Außen- und Innenschalen erstreckt und derart vorgeformt ist, daß seine Kontur bereits im nicht eingebauten Zustand an die von der Außenschale und der Innenschale bestimmte Kontur angepaßt ist, wobei es die Flansche der Innenschale umgreift.

Die aus einem Drahtgestrick oder Drahtgewebe vorgeformten erfindungsgemäßen Halteelemente können für eine jeweilige Abgasanlagen-Serie gefertigt und wegen ihrer geringen Abmessungen in einer Menge auf Lager genommen werden, die einem Serienbedarf unabhängig von den jeweiligen Abrufmengen entspricht, so daß bei der Fertigung der jeweiligen Abrufmenge an Abgasanlagen die erforderliche Menge von Halteelementen vom Lager entnommen und besonders einfach montiert werden kann. Mit diesen Halteelementen wird dabei in einfacher Weise eine Lagesicherung der Innenschale gegenüber der Außenschale sowohl in radialer als auch in axialer Richtung bewirkt, wobei die Wärmeisolierung nicht beeinträchtigt wird und auch die Schalldämpfung der Anordnung erhalten bleibt. Bei der Montage sind die Halteelemente leicht an den vorgegebenen Stellen anzubringen, so daß Montagefehler praktisch ausgeschlossen sind. Der Zeitaufwand ist minimal, da die Halteelemente gemäß der Erfindung lediglich auf die Flansche der Innenschale aufgesetzt werden. Bei "Außenschale" bzw. "Innenschale" werden hierunter auch analog Außen-(Innen-)Schalen-Teilbereiche verstanden, wenn die Außenschale/Innenschale in mehrere Teilbereiche unterteilt ist.

In vielen Fällen ist es ausreichend, wenn nur ein Halteelement zur Lagefixierung angeordnet ist. Dabei können diese, nur einen geringen Teil des Umfanges des Raumes zwischen der Innenschale und der Außenschale ausfüllenden Halteelemente entweder an einer Stelle, die nur im Bereich dieser Halteelemente isolierstoffrei ist, angeordnet werden oder an einer Stelle, an der in der Breite der Halteelemente am gesamten Umfang auf den Isolierstoff verzichtet werden kann. Im ersten Fall wird der vorzugsweise als Matte eingebrachte Isolierstoff an der Stelle eine Ausnehmung aufweisen, an der das Halteelement eingesetzt wird. Die Ausnehmung ist sehr einfach bei dem Ausstanzen (Beschneiden) der von einer Rolle genommenen Isoliermatte mit einzubringen, so daß kein weiterer Arbeitsgang erforderlich ist, zumal auf eine Maßgenauigkeit verzichtet werden kann. Im anderen Fall wird zwischen zwei Umfangsmatten ein Streifen von der Breite der Halteelemente unbelegt gelassen. In diesem Fall bieten sich Halteelemente mit größerer Ausdehnung (Bodenlänge) in Radialrichtung an, so daß bei Belegung mit nur einem Halteelement ein Sechstel des Umfanges belegt ist. Natürlich kann auch auf der gegenüberliegenden Seite ein weiteres Halteelement angeordnet sein, so daß dann ein Drittel des Umfanges belegt ist.

Um eine sichere Lagefixierung auch bei Anordnungen zu erreichen, bei denen zwischen der Innenschale und der Außenschale, insbesondere in dem Bereich, in dem das Halteelement angeordnet ist, ein relativ geringer Abstand gegeben ist, verlaufen gemäß einer Weiterführung die Flansche der Außenschale außermittig. Dabei ist gemäß einer weiteren Ausgestaltung die Außenschale von zwei Halbschalen gebildet, von denen die eine höher ist als die andere, so daß die Trennebene außerhalb der aus zwei identischen Halbschalen gebildeten Trennebene der Innenschale verläuft. Damit wird, wie beschrieben, eine bessere Lagefixierung erreicht, da bei dem Halteelement die Nut in die Flansche der Innenschale reichen und der in den Raum zwischen die Außenschalen verlaufende Abschnitt nicht in einer Ebene liegen. Dadurch ergeben sich besondere Sicherheiten gegen eine radiale Verschiebung der Innenschale, insbesondere gegen ein "Wegkippen".

Vorzugsweise weist das Halteelement einen zwischen die Flansche der Außenschale auslaufenden Abschnitt auf. Damit wird erreicht, daß die Halbschale in dem Bereich, in dem das oder die Halteelemente angeordnet ist/sind, zu den Flanschkanten auslaufend ausgebildet werden kann, so daß nur im Kantenbereich eine Metall/Metallberührung stattfindet und damit auch der Flanschbereich gut isoliert ist und auch keinen Schall abstrahlt.

Vorzugsweise sind bei dem Halteelement Länge und Höhe etwa gleich, während sich die Breite aus dem Abstand zwischen Innenschale und Außenschale einschließlich des Flanschbereiches ergibt. Die Höhe wird dabei durch die Bogenlänge entsprechend einem Winkel α ≈ 2 x (15° ... 30°) bezogen auf die Querachse der Innenschale und mit deren Radius bestimmt. Dabei weist gemäß einer Weiterführung das Halteelement an seiner der Innenschale zugewandten Seite in der Mittenebene eine Ausnehmung zur Aufnahme der Flansche der Innenschale auf, wobei der Mittelabschnitt in den Bereich zwischen den beiden Flanschen der Außenschale reicht.

Es hat sich gezeigt, daß damit die der Außenschale zugewandte Seite des Halteelementes etwa gedrittelt ist, wobei das erste und das dritte Drittel seiner Länge der Lagerung in einer Ausbuchtung der Außenschale ragt und das zweite Drittel zwischen den Flanschen gehalten ist. Dazu ist in vorteilhafter Weise die Außenschale so ausgebildet, daß mindestens die eine der beiden Halbschalen der Außenschale Bereiche oberhalb/unterhalb und entlang der Flansche aufweist, die zu mindestens zwei eine jeweils zumindest annähernd rechteckige Kammer bildenden Ausbuchtung en zur Aufnahme einer Isoliermatte verformt sind und die Halteelemente in einem Bereich zwischen zwei Ausbuchtungen derart angeordnet sind, daß nur die Seitenbereiche des Halteelementes in die jeweilige Ausbuchtung ragen.

Damit ist eine besonders sichere Lagefixierung der Innenschale gegenüber der Außenschale sowohl in radialer als auch in axialer Richtung erreicht. Dabei können die Ausbuchtungen auch nur in dem Bereich angeformt sein, in dem das/die Halteelemente angeordnet ist/sind. Diese Ausbuchtungen wirken dann für die Außenschale wie nach außen gerichtete Wulste versteifend. Bei der Anordnung mehrerer Halteelemente hat es sich als besonders vorteilhaft erwiesen, daß diese gegenüberliegend versetzt angeordnet sind.

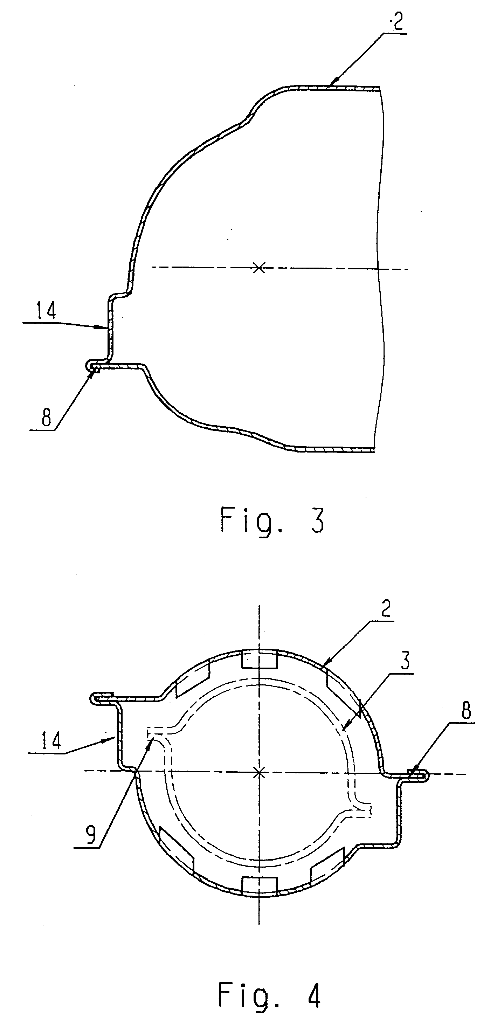

Eine weitere zweckmäßige Ausgestaltung ist dadurch gekennzeichnet, daß sowohl bei der Innenschale als auch bei der Außenschale die jeweils gegenüberliegenden Flansche in unterschiedlichen Ebenen liegen. Diese in Figur 4 gezeigte Ausgestaltung hat fertigungstechnische Vorteile und führt zu einer besonders einfachen Form der Halteelemente bei einer sicheren Lagerung. Der Vorteil hinsichtlich der Halteelemente ergibt sich dadurch, daß bei dieser Form der Außenschale die Halteelemente an der der Außenwand zugewandten Seite ganz in der Ausbuchtung liegen, d.h. der Anteil, der in den Bereich zwischen den Flanschen liegt, wird praktisch zu Null.

Vorzugsweise sind in der Innenschale ein oder axial hintereinander mehrere der Abgasreinigung dienende Körper angeordnet. Damit ist die Vorrichtung auch anwendbar für Anordnungen zur Reinigung des Abgases eines Verbrennungsmotors, also auf einem anderen Sektor als die Schalldämpferanordnungen. Diese Anordnungen sind bekannt, wie sich aus dem aufgezeigten Stand der Technik ergibt, und verlangen eine besonders sorgfältige Lagerung der katalytisch beschichteten Monolithe. Dabei hat es sich als besonders vorteilhaft erwiesen, daß die der Aufnahme der der Abgasreinigungskörper dienende Innenschale in ihrer Längserstreckung im Bereich zwischen den Abgasreinigungskörpern eine nach innen gerichtete längliche umlaufende Sicke aufweist, in welcher das Halteelement angeordnet ist. Damit ist die Innenschale in dem Bereich zwischen zwei der Abgasreinigung dienenden Körper "eingeschnürt", wobei in diesem Bereich eine Distanzhalterung der Abgasreinigungskörper erfolgt, z.B. durch einen eingesetzten Keramikring. Im Bereich dieser Einschnürung ist es nun besonders vorteilhaft das oder die Halteelemente anzuordnen, da dort die günstigsten Raumverhältnisse sind und die Breite des/der Halteelemente größer ist als in den benachbarten Bereichen. Dabei kann/können das/die Halteelemente der Kontur der Innenschale, ggf. auch in einem Bereich vor und hinter der Einschnürung angepaßt sein, wobei die Lagerung auch für extreme Belastungen Vorteile aufweist.

Die Erfindung bezieht sich ferner auf eine Vorrichtung in einer der Reinigung und/oder Schalldämpfung von Verbrennungsmotor-Abgasen dienenden Abgasanlage mit einem Einlaßtrichter, einem Auslaßtrichter und dazwischenliegendem Durchströmungsabschnitt, mit wenigstens einem vom Abgas Körper und einer ein Gehäuse bildenden Außenschale, welche den Körper mit einem Abstand umgibt, in dem insbesondere Isolierstoff angeordnet ist, zur Lagefixierung des Körpers in der Außenschale, welche aus Halbschalen mit zu deren Verbindung vorgesehenen Flanschen aufgebaut ist, wobei in einem isolierstoffreien Bereich des Raumes zwischen Körper und Außenschale mindestens ein aus einem metallischen Gestrick oder Gewebe gebildetes Halteelement angeordnet ist, das sich zwischen den Flanschen und dem Körper erstreckt, wobei diese Vorrichtung erfindungsgemäß dadurch gekennzeichnet ist, daß an dem Körper ein Steg zum Anschluß an das einteilig ausgebildete Halteelement angeformt ist, welches sich nur über einen Teil des Umfangs der Außenschale und des Körpers erstreckt und derart verformt ist, daß seine Kontur bereits im nicht eingebauten Zustand an die von der Außenschale und dem Körper bestimmte Kontur angepaßt ist, wobei es den Steg des Körpers umgreift. Damit ist es möglich, einen der Abgasreinigung dienenden Körper unmittelbar in seiner Lage zu fixieren, ohne daß es einer Innenschale bedarf. Dies ist grundsätzlich bei allen der Abgasreinigung dienenden Körpern möglich, und zwar besonders einfach bei metallischen Körpern.

Es sind demnach, wenn von der Abgasreinigung dienenden Körper geschrieben ist, katalytisch beschichtete Monolithe, die vorzugsweise der Reinigung der Abgase von Ottomotoren dienen, gemeint, aber auch Filterkörper zum Reinigen des Abgases von Rußpartikeln bei Dieselmotoren, beispielsweise in Form von porösen Keramikkörpern oder in Form metallischer siebartig ausgebildeter oder gewickelter Körper mit Kanälen in Achsrichtung. Schließlich können in der Innenschale Einbauten ähnlich wie in konventionellen Schalldämpfern vorhanden oder angeformt sein. In allen Fällen ist das Problem einer sicheren Lagefixierung der Innenschale bzw. des Körpers zu lösen.

Es wird darauf hingewiesen, daß die in den Unteransprüchen 2 bis 11 angegebenen Merkmale zum Teil auch für sich, also ohne Einbeziehung mindestens der Merkmale des Anspruches 1 technisch sinnvoll ausführbar sind.

Ferner wird noch der Hinweis gemacht, daß entsprechend wie die Ausführung nach Anspruch 1 gleichfalls die Ausführung nach Anspruch 12 soweit technisch sinnvoll auch in Verbindung mit den Merkmalen gemäß den Unteransprüchen 2 bis 11 zumindest in sinngemäßer Kombination (insbesondere unter Ersatz der Innenschale durch Abgasreinigungskörper sowie der Innenschale-Flansche durch Steg) vom Schutz der vorliegenden Erfindung umfaßt ist.

Die Erfindung und Ausgestaltungen der Erfindung werden nachfolgend anhand bevorzugter, zeichnerisch dargestellter Ausführungsbeispiele samt Weiterführungen beschrieben. Es zeigen:
- Fig. 1:: einen Teillängsschnitt durch eine Anordnung mit zwei der Abgasreinigung dienenden Körpern;
- Fig. 2:: einen Querschnitt ohne Abgasreinigungskörper in der Zeichenebene um 90° gekippt;
- Fig. 3:: eine Hälfte einer Außenschale im Querschnitt;
- Fig. 4:: einen Querschnitt einer Anordnung mit Flanschen in unterschiedlichen Ebenen;
- Fig. 5:: ein Halteelement nach der Erfindung in
a) Ansicht in Längsrichtung;
b) Ansicht in Querrichtung;
c) Schnitt A-A;
d) Schnitt B-B.

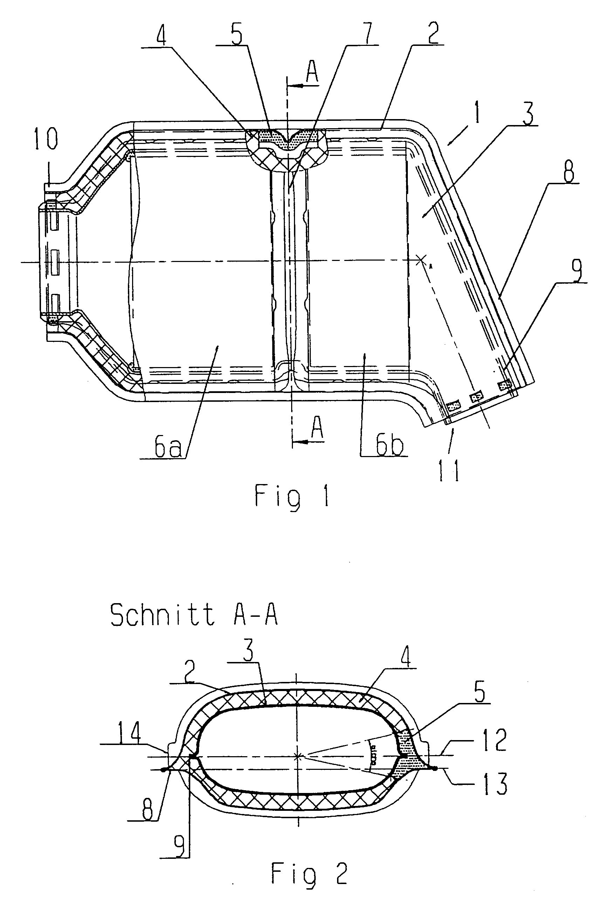

Die in der Fig. 1 im Teillängsschnitt dargestellte Abgasanlage für Fahrzeuge weist ein Gehäuse 1 auf, das im wesentlichen aus einer längs durchgehenden Außenschale 2 und einer ebenfalls längs durchgehenden Innenschale 3 sowie einer längs durchgehenden Isolierung 4 zwischen der Außenschale 2 und der Innenschale 3 sowie einem erfindungsgemäßen Halteelement 5 besteht, das zwischen der Außenschale 2 und der Innenschale 3 angeordnet ist. In der Innenschale 3 sind zwei der Abgasreinigung dienende Körper 6a, 6b hintereinander angeordnet, beabstandet durch eine umlaufende Sicke 7 in der Innenschale 3. Wie die Lagerung der Körper 6a, 6b in der Innenschale 3 im einzelnen erfolgt, ist nicht Gegenstand dieser Erfindung. Derartige Lagerungen sind hinreichend bekannt und ergeben sich z.B. aus der DE-A-39 22 667. Wesentlich, auch im Sinne der Erfindung, ist jedoch, daß das Halteelement 5 in die umlaufende Sicke 7 eingreifend angeordnet ist, so daß an dieser Stelle die axiale Lagefixierung erfolgt. Dabei genügt in der Regel ein einziges Halteelement 5 zur Lagefixierung der Innenschale 3 gegenüber der Außenschale 2; es können insbesondere bei größeren Anlagen jedoch auch zwei Halteelemente 5 angeordnet werden. Bei besonders großen Anordnungen können auch mehrere Halteelemente 5 versetzt gegenüberliegend angeordnet sein. Bei nur einem der Abgasreinigung dienenden Körper 6 erfolgt die Anordnung der Halteelemente 5 derart, daß diese - wie auch in dem Fall der Anordnung in der umlaufenden Sicke 7 - durch die Isolierung 4 in Axialrichtung gehalten werden. Bei der Lagerung in der umlaufenden Sicke erfolgt die Halterung jedoch vorwiegend durch die Sicke 7.

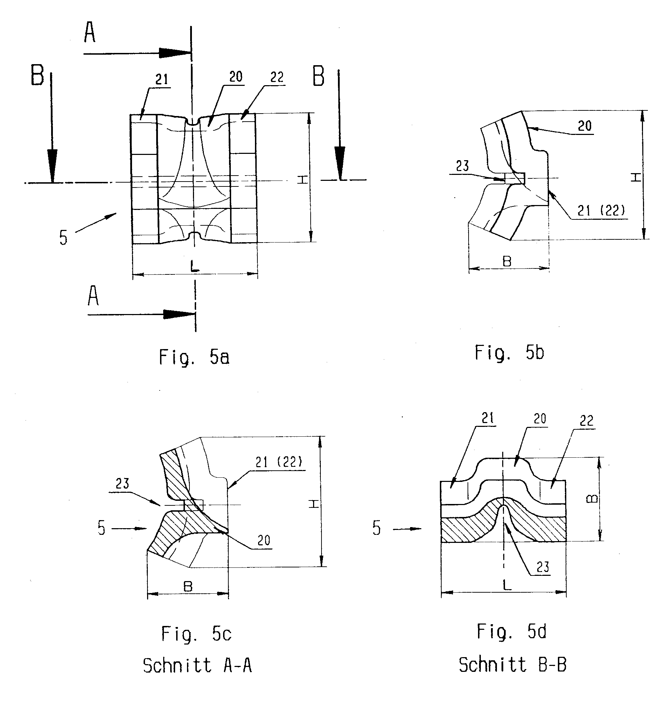

Die Außenschale 2 besteht aus zwei Halbschalen mit der Flanschverbindung 8, die durch Verschweißen oder Bördelung bewirkt wird. Die Innenschale 3 besteht ebenfalls aus zwei Halbschalen mit den Flanschen 9. Die Innenschale 3 besteht vorzugsweise aus rostfreiem, hochtemperaturbeständigem Stahlblech. Die Außenschale 2 besteht vorzugsweise aus einem weniger hochlegierten Stahlblech. Die Isolierung 4 kann als Isoliermatte ausgebildet sein und besteht vorzugsweise aus Keramikfasern oder ist eine im Handel erhältlich sogenannte Quellmatte, die an Volumen zunimmt, wenn sie auf erhebliche Temperaturen erwärmt wird, wodurch die Haltekraft zwischen Innenschale 3 und Außenschale 2 erhöht wird. Die erfindungsgemäßen Halteelemente 5, die in Verbindung mit den Fig. 5 bis 5d näher beschrieben werden, bestehen vorzugsweise aus einem zusammengepreßten formgebenden Drahtgestrick, wobei der Draht rostfrei und hochtemperaturbeständig ist. Die Innenschale 3 ist der tragende Bestandteil des Gehäuses 1. Infolge des radialen Abstandes zwischen der Innenschale 3 und der Außenschale 2 sowie infolge der Isolierung 4 dazwischen wird die Außenschale 2 nicht besonders heiß. Außerdem erreichen die Körper 6a, 6b besonders rasch ihre "Anspringtemperatur" für die katalytische Abgasreinigung, weil die Wärmeverluste durch das Gehäuse 1 hindurch reduziert sind. Dieses gilt in gleicher Weise für die Abbrenntemperatur bei der Verwendung von Körpern 6a, 6b für die Reinigung des Abgases von Rußpartikeln (Rußfilter).

In dem Endbereich 10 der Anordnung ist an die jeweiligen Schalen 2, 3 ein Einlauftrichter für das vom Motor des Fahrzeuges kommende Abgas angeformt, in dem anderen Endbereich 11 ein Auslauftrichter, so daß die Anordnung in die Abgasleitung des Fahrzeuges integriert werden kann. Sowohl die Innenschale 3 als auch die Außenschale 2 können zur Versteifung umlaufende oder in Längsrichtung verlaufende Sicken aufweisen. Der Auslauftrichter ist in dem dargestellten Ausführungsbeispiel abgewinkelt, so daß das Abgas unter einem stumpfen Winkel gegenüber der Längsachse (Durchströmachse) abgeführt wird.

In Fig. 2 ist ein Querschnitt an der Stelle A-A nach Fig. 1 dargestellt. In dieser Fig. 2 ist die Anordnung des Halteelementes 5 nach der Erfindung deutlich erkennbar. Das Halteelement 5 ist an seiner der Innenschale 3 zugewandten Seite an diese angepaßt, es umgreift die Flansche 9 der Innenschale 3. An seiner der Außenschale 2 zugewandten Seite ist das Halteelement 5 an deren Kontur angepaßt und ragt bis in den Bereich zwischen den Flanschen 8, so daß für das Halteelement 5 ein in etwa dreieckförmiger Querschnitt entsteht. In radialer Richtung erstreckt sich das Halteelement 5 über einen Bereich, der durch die Bogenlänge entsprechend einem Winkel α ≈ 2 x (15° ... 30°) bestimmt wird, bezogen auf die Querachse und mit deren Radius. Wie die Fig. 2 ebenfalls deutlich zeigt, ist die Innenschale 3 bei diesem Ausführungsbeispiel aus zwei identischen Halbschalen gebildet, so daß die Trennfuge 12 als Mittelachse verläuft. Diese Halbschalen sind in einem Werkzeug einfach zu pressen und können durch Schweißen verbunden werden. Die Außenschale 2 weist bei diesem bevorzugten Ausführungsbeispiel einen anderen Aufbau auf. Die obere Halbschale der Außenschale 2 ist höher als die untere Halbschale, was zur Folge hat, daß die Trennfuge 13 der Außenschale 2 außermittig und unterhalb der Trennfuge 12 der Innenschale 3 verläuft. Hierdurch ergibt sich für die Funktion des Halteelementes 5 eine noch bessere Lagefixierung und damit eine noch bessere Halterung der Innenschale 3 samt Körper 6a, 6b. Bei einer runden Ausführung der Körper 6a, 6b ist der Querschnitt, der den oder die Körper an ihrem Umfang umfassenden, stirnseitig zum Durchtritt des Abgases offenen Innenschale 3 rohrförmig. Es sind auch andere Formen möglich, wie z.B. dreieckig oder quadratisch, die Anordnung der Halteelemente 5 erfolgt jedoch grundsätzlich immer nach gleicher Art.

Wie die Fig. 2 ferner erkennen läßt, ist die Außenschale 2 in dem Bereich, in dem das Halteelement 5 angeordnet ist, etwas eingezogen, so daß ein geringerer Abstand gegenüber der Innenschale 3 an dieser Stelle entsteht. Ferner ist eine eine annähernd rechteckige Kammer bildende Ausbuchtung 14 zur Aufnahme und radialen Halterung des Isolierstoffes 4 zu erkennen, die entlang der oberen Halbschale oberhalb des Flansches 8 verläuft, außer in dem Bereich, in dem die Halteelemente 5 angeordnet sind. Diese Ausbuchtungen 14 können auch auf einzelne Abschnitte der Längserstreckung der Außenschale 2 begrenzt sein, sie liegen vorzugsweise dann in dem Bereich der Halteelemente 5, so daß diese in ihren seitlichen Bereichen - wie bei Fig. 5 näher beschrieben - in die Ausbuchtungen 14 ragen und dort gehalten werden. Dort ist ebenso die Flanschverbindung der Flansche 8 durch Bördelung gezeigt. Diese Flanschverbindung kann auch durch Verschweißen gebildet werden. Die Ausbuchtung 14 kann auch sowohl in der oberen Halbschale als auch in der unteren Halbschale oder in beiden Halbschalen der Außenschale 2 angeordnet sein.

In der Fig. 4 ist ein Querschnitt einer Anordnung für kreisrunde Körper dargestellt. Diese Anordnung zeichnet sich dadurch aus, daß sowohl die Innenschale 3 als auch die Außenschale 2 in ihren Halbschalen rotationssymmetrisch ausgebildet sind. Dadurch ergibt sich trotz Verwendung gleicher Halbschalen für die Außenschale 2 wie auch gleicher Halbschalen für die Innenschale 3 eine Anordnung, bei welcher sowohl bei der Innenschale 3 als auch bei der Außenschale 2 die jeweils gegenüberliegenden Flansche 8 bzw. 9 in unterschiedlichen Ebenen liegen. Auch diese Ausgestaltung dient der besseren Lagefixierung der Innenschale 3 gegenüber der Außenschale 2 und damit einer sichereren Lage der von der Innenschale 3 umgebenen der Abgasreinigung dienenden Körper.

In den Fig. 5a bis 5d ist das erfindungsgemäße Halteelement 5 im einzelnen dargestellt. Dabei zeigt die Fig. 5a eine Ansicht auf die - im eingebauten Zustand - der Außenschale 2 zugewandten Seite, Fig. 5b eine Seitenansicht, die Fig. 5c einen Schnitt an der Stelle A-A der Fig. 5a und Fig. 5d einen Schnitt an der Stelle B-B der Fig. 5a. Das Halteelement 5 ist aus einem rostfreien hochtemperaturfesten Drahtgestrick oder Drahtgewirk gebildet. Grundsätzlich könnte es auch aus einem bei hoher Temperatur quellfähigen Stoff gebildet sein. Das hätte dann den Vorteil, daß sich das Halteelement 5 im Betrieb besonders fest einklemmt und die Sicherungsfunktion gegen radiale oder axiale Verschiebung der Innenschale 3 gegenüber der Außenschale 2 noch sicherer wahrnimmt. Diese Anwendung von Quellmaterial ist derzeit ausschließlich eine Kostenfrage, weshalb sich vorzugsweise bei speziellen Anordnungen Anwendung findet.

Das Halteelement 5 weist auf seiner der Außenschale 2 zugewandten Seite, die der Kontur der Außenschale 2 angepaßt ist, drei Abschnitte auf, den Mittenabschnitt 20 und die beiden benachbarten seitlichen Abschnitte 21 und 22. Die beiden seitlichen Abschnitte 21, 22 sind so ausgebildet, daß sie in die Ausbuchtung 14 der Außenschale 2 eingesetzt werden, der Mittenabschnitt 20 läuft in der Darstellung nach Fig. 5c für das dargestellte Ausführungsbeispiel der Fig. 1 bis 4 keilförmig aus und ragt mit diesem Abschnitt in den Bereich der Flansche 8. Auf der der Innenschale 3 zugewandten Seite, die der Kontur der Innenschale 3 angepaßt ist, weist das Halteelement 5 eine Ausnehmung 23 auf. Im eingebauten Zustand umgreift diese Ausnehmung 23 die Flansche 9 der Innenschale 3. In dem dargestellten Ausführungsbeispiel ist die Länge (L) des Halteelementes 5 etwa gleich der Höhe (H), während die Breite (B) sich wie beschrieben aus der Bogenlänge zu dem Winkel 2 α ergibt. Bei der Montage der Anordnung wird das Halteelement 5 einfach auf die Flansche 9 der Innenschale 3 aufgesetzt, sodann wird nach Einlegen der Isolierung 4 die Außenschale 2 aufgesetzt, wobei der keilförmige Teil des Mittenabschnittes 20 des Halteelementes 5 in den Bereich zwischen den Flanschen 8 der Außenschale 2 ragt.

Die Lagefixierung ist grundsätzlich nicht von dem Vorhandensein der Isolierung 4 abhängig. Die Halteelemente 5 bewirken eine zuverlässige Lagerung der Innenschale 3 gegenüber der Außenschale 2 auch bei einer Anordnung ohne den Isolierstoff 4, so daß auch diese Lösung von dem Erfindungsgedanken Gebrauch macht.

## Patentansprüche

1. Vorrichtung in einer der Reinigung und/oder der Schalldämpfung von Verbrennungsmotor-Abgasen dienenden Abgasanlage mit einem Einlaßtrichter (10) , einem Auslaßtrichter (11) und dazwischenliegendem Durchströmungsabschnitt, mit einer vom Abgas durchströmten Innenschale (3) und einer ein Gehäuse (1) bildenden Außenschale (2), wobei die Innen- und Außenschale (3, 2) jeweils aus Halbschalen aufgebaut sind, die zu ihrer Verbindung miteinander jeweils Flansche (9, 8) aufweisen, und wobei in einem isolierstoffreien Bereich des Raumes zwischen Innen- und Außenschale (3, 2) mindestens ein aus einem metallischen Gestrick oder Gewebe gebildetes Halteelement (5) angeordnet ist, das sich zwischen den Flanschen (9, 8) der Innen- und Außenschalen (3, 2) erstreckt,
dadurch gekennzeichnet, daß
das einteilig ausgebildete Halteelement (5) sich nur über einen Teil des Umfangs der Außen- und Innenschalen (3, 2) erstreckt und derart vorgeformt ist, daß seine Kontur bereits im nicht eingebauten Zustand an die von der Außenschale (2) und der Innenschale (3) bestimmte Kontur angepaßt ist, wobei es die Flansche (9) der Innenschale (3) umgreift.

2. Vorrichtung nach Anspruch 1, dadurch gekennzeichnet, daß die Flansche (8) der Außenschale (2) außermittig verlaufen.

3. Vorrichtung nach Anspruch 1 oder 2, dadurch gekennzeichnet, daß das Halteelement (5) einen zwischen die Flansche (8) der Außenschale (2) auslaufenden Abschnitt (20) aufweist.

4. Vorrichtung nach Anspruch 1, 2 oder 3, dadurch gekennzeichnet, daß Länge (L) und Höhe (H) des Halteelementes (5) etwa gleich sind, während sich die Breite (B) aus dem Abstand zwischen Innenschale (3) und Außenschale (2) einschließlich des Flanschbereiches ergibt, wobei die Höhe (H) durch die Bogenlänge entsprechend einem Winkel α ≈ 2 x (15° ... 30°), bezogen auf die Querachse der Innenschale (2) und mit deren Radius bestimmt ist.

5. Vorrichtung nach einem der Ansprüche 1 bis 4, dadurch gekennzeichnet, daß in der Innenschale (3) ein oder axial hintereinander mehrere der Abgasreinigung dienende Körper (6a, 6b) angeordnet sind.

6. Vorrichtung nach einem der Ansprüche 1 bis 5, dadurch gekennzeichnet, daß die der Aufnahme von Abgasreinigungskörpern (6a, 6b) dienende Innenschale (3) in ihrer Längserstreckung im Bereich zwischen den Abgasreinigungskörpern (6a, 6b) eine nach innen gerichtete längliche umlaufende Sicke (7) aufweist, in welcher das Halteelement (5) angeordnet ist.

7. Vorrichtung nach einem der Ansprüche 1 bis 6, dadurch gekennzeichnet, daß die Außenschale (2) aus zwei Halbschalen gebildet ist, von denen die eine höher als die andere ist, so daß die Trennebene außerhalb der Trennebene der Innenschale (3) verläuft.

8. Vorrichtung nach einem der Ansprüche 1 bis 7, dadurch gekennzeichnet, daß mindestens die eine der beiden Halbschalen der Außenschale (2) Bereiche oberhalb/unterhalb und entlang der Flansche (8) aufweist, die zu mindestens zwei eine jeweils zumindest annähernd rechteckige Kammer bildenden Ausbuchtung en (14) zur Aufnahme einer Isoliermatte (4) verformt sind und die Halteelemente (5) in einem Bereich zwischen zwei Ausbuchtungen derart angeordnet sind, daß nur die Seitenbereiche (21, 22) des Halteelementes (5) in die jeweilige Ausbuchtung (14) ragen.

9. Vorrichtung nach einem der Ansprüche 1 bis 8, dadurch gekennzeichnet, daß sowohl bei der Innenschale (3) als auch bei der Außenschale (2) die jeweils gegenüberliegenden Flansche (8, 9) in unterschiedlichen Ebenen liegen.

10. Vorrichtung nach einem der Ansprüche 2 bis 9, dadurch gekennzeichnet, daß bei der Anordnung mehrerer Halteelemente (5) diese gegenüberliegend radial versetzt angeordnet sind.

11. Vorrichtung nach einem der Ansprüche 1 bis 10, dadurch gekennzeichnet, daß das Halteelement (5) an seiner der Innenschale (3) zugewandten Seite in der Mittenebene (20) eine Ausnehmung (23) zur Aufnahme der Flansche (9) der Innenschale (3) aufweist und an seiner der Außenschale (2) zugewandten Seite der Mittelabschnitt (20) in den Bereich zwischen den beiden Flanschen (8) der Außenschale (2) reicht.

12. Vorrichtung in einer der Reinigung und/oder Schalldämpfung von Verbrennungsmotor-Abgasen dienenden Abgasanlage mit einem Einlaßtrichter (10), einem Auslaßtrichter (11) und dazwischenliegendem Durchströmungsabschnitt, mit wenigstens einem vom Abgas durchströmten Körper (6a, 6b) und einer ein Gehäuse (1) bildenden Außenschale (2), welche den Körper (6a, 6b) mit einem Abstand umgibt, in dem insbesondere Isolierstoff (4) angeordnet ist, zur Lagefixierung des Körpers (6a, 6b) in der Außenschale (2), welche aus Halbschalen mit zu deren Verbindung vorgesehenen Flanschen (8) aufgebaut ist, wobei in einem isolierstoffreien Bereich des Raumes zwischen Körper (6a, 6b) und Außenschale (2) mindestens ein aus einem metallischen Gestrick oder Gewebe gebildetes Halteelement angeordnet ist, das sich zwischen den Flanschen (8) und dem Körper (6a, 6b) erstreckt,
dadurch gekennzeichnet, daß
an dem Körper (6a, 6b) ein Steg zum Anschluß an das einteilig ausgebildete Halteelement angeformt ist, welches sich nur über einen Teil des Umfangs der Außenschale (2) und des Körpers (6a, 6b) erstreckt und derart vorgeformt ist, daß seine Kontur bereits im nicht eingebauten Zustand an die von der Außenschale (2) und dem Körper (6a, 6b) bestimmte Kontur angepaßt ist, wobei es den Steg des Körpers (6a, 6b) umgreift.

## Claims

1. Device in an exhaust gas system serving to clean and/or sound-damp internal combustion engine exhaust gases, having an inlet funnel (10), an outlet funnel (11) and throughflow section located therebetween, having an inner shell (3) through which the exhaust gas flows and an outer shell (2) forming a housing (1), the inner and outer shells (3, 2) each being formed from half shells which each have flanges (9, 8) for the purpose of their connection to one another, and there being arranged in a region of the space between inner and outer shells (3, 2) which is free of insulating material at least one holding element (5) which is formed from a metal knitted or woven material and which extends between the flanges (9, 8) of the inner and outer shells (3, 2), characterized in that the holding element (5) of one-piece construction only extends over part of the periphery of the outer and inner shells (3, 2) and is pre-shaped such that its contour is already matched in the uninstalled state to the contour determined by the outer shell (2) and the inner shell (3), said holding element (5) embracing the flanges (9) of the inner shell (3).

2. Device according to Claim 1, characterized in that the flanges (8) of the outer shell (2) run eccentrically.

3. Device according to Claim 1 or 2, characterized in that the holding element (5) has a section (20) diverging between the flanges (8) of the outer shell (2).

4. Device according to Claim 1, 2 or 3, characterized in that length (L) and height (H) of the holding element (5) are approximately equal, while the width (B) is produced from the spacing between inner shell (3) and outer shell (2) including the flange region, the height (H) being determined by the curve length according to an angle α ≈ 2 x (15° .... 30°) in relation to the transverse axis of the inner shell (2) and with the radius thereof.

5. Device according to one of Claims 1 to 4, characterized in that one body or a plurality of bodies (6a, 6b) arranged axially one behind the other, serving to clean exhaust gas, are arranged in the inner shell (3).

6. Device according to one of Claims 1 to 5, characterized in that the inner shell (3) serving to receive exhaust gas cleaning bodies (6a, 6b) has in its longitudinal extent in the region between the exhaust gas cleaning bodies (6a, 6b) an inwardly directed elongate peripheral bead (7) in which the holding element (5) is arranged.

7. Device according to one of Claims 1 to 6, characterized in that the outer shell (2) is formed from two half shells, of which one is higher than the other, so that the parting plane runs outside the parting plane of the inner shell (3).

8. Device according to one of Claims 1 to 7, characterized in that at least one of the two half shells of the outer shell (2) has regions above/below and along the flanges (8) which are deformed into at least two bulging parts (14), forming a chamber which in each case is at least approximately rectangular, for receiving an insulating mat (4) and the holding elements (5) are arranged in a region between two bulging parts such that only the lateral regions (21, 22) of the holding element (5) project into the respective bulging part (14).

9. Device according to one of Claims 1 to 8, characterized in that both in the case of the inner shell (3) and in the case of the outer shell (2) the respectively opposing flanges (8, 9) lie in different planes.

10. Device according to one of Claims 2 to 9, characterized in that in the case of the arrangement of a plurality of holding elements (5), these are arranged opposite and radially offset.

11. Device according to one of Claims 1 to 10, characterized in that the holding element (5) has on its side facing the inner shell (3) in the centre plane (20) a cutout (23) for receiving the flanges (9) of the inner shell (3) and on its side of the central section (20) facing the outer shell (2) reaches into the region between the two flanges (8) of the outer shell (2).

12. Device in an exhaust gas system serving to clean and/or sound-damp internal combustion engine exhaust gases, having an inlet funnel (10), an outlet funnel (11) and throughflow section located therebetween, having at least one body (6a, 6b) through which the exhaust gas flows and an outer shell (2) which forms a housing (1) and which surrounds the body (6a, 6b) at a spacing, in which in particular insulating material (4) is arranged, for fixing the position of the body (6a, 6b) in the outer shell (2), which is formed from half shells with flanges (8) provided for the connection thereof, there being arranged in a region of the space between body (6a, 6b) and outer shell (2) which is free of insulating material at least one holding element which is formed from a metal knitted or woven material and which extends between the flanges (8) and the body (6a, 6b), characterized in that there is integrally formed on the body (6a, 6b) a web for connection to the holding element which is of one-piece construction and which only extends over part of the periphery of the outer shell (2) and of the body (6a, 6b) and is pre-shaped such that its contour is already matched in the uninstalled state to the contour determined by the outer shell (2) and the body (6a, 6b), this holding element embracing the web of the body (6a, 6b).

## Revendications

1. Dispositif disposé dans une installation de gaz d'échappement servant à purifier les gaz d'échappement de moteurs à combustion interne et/ou à en amortir le bruit, comprenant un cône d'entrée (10), un cône de sortie (11) et une partie de passage située entre les deux, comprenant également un boîtier intérieur (3) parcouru par les gaz d'échappement et un boîtier extérieur (2) formant un carter (1), sachant que les boîtiers intérieur et extérieur (3, 2) sont chacun formés par des demi-coques qui présentent des brides (9, 8) destinées à les relier entre elles, et sachant qu'au moins un élément de maintien (5) formé par un tricotage ou une toile métallique qui s'étend entre les brides (9, 8) des boîtiers intérieur et extérieur (3, 2) est disposé dans une zone exempte de matière isolante de l'espace entre les boîtiers intérieur et extérieur (3, 2),
caractérisé en ce que l'élément de maintien (5) réalisé d'un seul tenant ne s'étend que sur une partie du pourtour des boîtiers intérieur et extérieur (3, 2) et est préformé de telle manière que, alors qu'il n'est pas encore posé, son contour corresponde déjà au contour délimité par les boîtiers intérieur (3) et extérieur (2), sachant qu'il entoure les brides (9) du boîtier intérieur (3).

2. Dispositif selon la revendication 1, caractérisé en ce que les brides (8) du boîtier extérieur (2) s'étendent de façon excentrée.

3. Dispositif selon la revendication 1 ou 2, caractérisé en ce que l'élément de maintien (5) présente une partie (20) se terminant entre les brides (8) du boîtier extérieur (2).

4. Dispositif selon la revendication 1, 2 ou 3, caractérisé en ce que la longueur (L) et la hauteur (H) de l'élément de maintien (5) sont approximativement identiques, tandis que la largeur (B) résulte de l'écart entre le boîtier intérieur (3) et le boîtier extérieur (2) incluant la zone des brides, sachant que la hauteur (H) est déterminée par la longueur de l'arc correspondant à un angle α ≈ 2 x (15° ... 30°) par rapport à l'axe transversal du boîtier intérieur (2), et à l'aide du rayon de ce dernier.

5. Dispositif selon l'une des revendications 1 à 4, caractérisé en ce que dans le boîtier intérieur (3) sont disposés un ou plusieurs corps (6a, 6b) placés axialement les uns derrière les autres, qui servent à purifier les gaz d'échappement.

6. Dispositif selon l'une des revendications 1 à 5, caractérisé en ce que le boîtier intérieur (3) servant de logement aux corps de purification des gaz d'échappement (6a, 6b) présente, sur son étendue longitudinale, dans la zone entre les corps pour la purification des gaz d'échappement (6, 6b), une moulure (7) circulaire allongée qui est orientée vers l'intérieur, dans laquelle est disposé l'élément de maintien (5).

7. Dispositif selon l'une des revendications 1 à 6, caractérisé en ce que le boîtier extérieur (2) est formé par deux demi-coques dont une est plus haute que l'autre, de sorte que le plan de séparation s'étend en-dehors du plan de séparation du boîtier intérieur (3).

8. Dispositif selon l'une des revendications 1 à 7, caractérisé en ce qu'au moins l'une des deux demi-coques du boîtier extérieur (2) présente au-dessus/en dessous et le long des brides (8) des zones qui sont façonnées de manière à former au moins deux bombements (14) formant un logement au moins approximativement rectangulaire destiné à recevoir une nappe isolante (4) et en ce que les éléments de maintien (5) sont disposés de telle manière dans une zone entre deux bombements que seules les parties latérales (21, 22) de l'élément de maintien (5) pénètrent dans chaque bombement (14).

9. Dispositif selon l'une des revendications 1 à 8, caractérisé en ce que à la fois sur le boîtier intérieur (3) et sur le boîtier intérieur (2), les brides (8, 9) qui sont chaque fois opposées l'une à l'autre se situent dans des plans différents.

10. Dispositif selon l'une des revendications 2 à 9, caractérisé en ce qu'en disposant plusieurs éléments de maintien (5), ceux-ci sont disposés décalés radialement les uns par rapport aux autres.

11. Dispositif selon l'une des revendications 1 à 10, caractérisé en ce que l'élément de maintien (5) présente dans le plan médian (20) de son côté tourné vers le boîtier intérieur (3) un évidement (23) destiné à recevoir les brides (9) du boîtier intérieur (3) et en ce que sur son côté tourné vers le boîtier extérieur (2), la partie médiane (20) pénètre dans la zone entre les deux brides (8) du boîtier extérieur (2).

12. Dispositif disposé dans une installation de gaz d'échappement servant à purifier les gaz d'échappement de moteurs à combustion interne et/ou à en amortir le bruit, comprenant un cône d'entrée (10), un cône de sortie (11) et une partie de passage située entre les deux, comprenant également au moins un corps (6a, 6b) parcouru par les gaz d'échappement et un boîtier extérieur (2) formant un carter (1) qui entoure avec un écart le corps (6a, 6b) dans lequel est notamment disposée de la matière isolante (4) pour positionner le corps (6a, 6b) dans le boîtier extérieur (2) composé de demi-coques munies de brides (8) pour les relier entre elles, sachant qu'au moins un élément de maintien formé par un tricotage ou une toile métallique qui s'étend entre les brides (8) et le corps (6a, 6b) s'étend dans une zone exempte de matière isolante de l'espace entre le corps (6a, 6b) et le boîtier extérieur (2),
caractérisé en ce qu'une aile destinée à relier le corps (6a, 6b) à l'élément de maintien d'un seul tenant est réalisée sur le corps (6a, 6b), élément de maintien qui ne s'étend que sur une partie du pourtour du boîtier extérieur (2) et du corps (6a, 6b) et qui est préformé de telle manière que son contour, alors qu'il n'est pas encore monté, soit déjà adapté au contour défini par le boîtier extérieur (2) et par le corps (6a, 6b), sachant qu'il entoure l'aile du corps (6a, 6b).
